# EUROPEAN PATENT APPLICATION

(11) **EP 1 170 624 A1**
(43) Date of publication of application: **09.01.2002**
(21) Application number: 00810592.6
(22) Date of filing: 05.07.2000
(51) Int. Cl.: G02F 1/1337

(54) **Nematic liquid crystal electrooptical element and device**

(71) Applicant: Rolic AG, 6301 Zug (CH)
(72) Inventor: Schadt, Martin, 4411 Seltisberg (CH); Stalder, Martin, 4104 Oberwil (CH)
(74) Representative: Liebetanz, Michael, Dipl.-Phys.

(57) **Abstract**

A liquid crystal electrooptical element comprises a pair of substrates (20, 21) positioned between a pair of polarising plates, electrodes defining pixel areas (1) and alignment layers disposed on the respective opposing inside surfaces of said substrates (20, 21) and a chiral nematic liquid crystal sandwiched between said pair of surfaces. At least one of the alignment layers is patterned in such a way that the azimuth or pretilt or both alignment directions (14 to 17, 16 to 18) are different at the substrate interfaces suppressing the growth of the ground state of the liquid crystal. When an initial electrical pulse is applied, one of the at least two bistable states is reached, wherein the contrast ratio between said bistable states is two or greater. A device with these elements is long-term bistable and does not require electronic refreshing as long as the displayed information is not changed. Therefore, the power consumption of this bistable device is minimal.

## Description

The invention relates to nematic liquid crystal electrooptical elements and a display device using said elements.

In 1980 Berreman demonstrated temporary bistability in twisted nematic LC cells. 15 years later Tanaka showed a novel addressing scheme which shortens the display addressing and response time. A corresponding temporarily bistable twisted nematic (BTN) element is disclosed in EP 0 579 247.

Berreman's cells are based on the potential of chirally doped nematic LC molecules to align in different twist configurations, when sandwiched between two substrates with suitable alignment layers. Such cells show three relevant configurations: an energetic ground state Φ₀ characterised by the twist angle Φ₀; a first metastable state Φ₁ with a twist of Φ₁ = Φ₀ - 180°; and a second metastable state Φ₂ with a twist of Φ₂ = Φ₀ + 180°.

Berreman focused his work on cells with a twist of Φ₀ = 180° in the ground state, where the orientation layers at the two substrates are parallel aligned and exhibit parallel pretilt angles. Due to the parallel pretilt angles on the two uniaxially aligned substrates, the ground state Φ₀ is splay deformed. With an adequate electrical reset pulse applied to the cell, the positive dielectric anisotropic liquid crystal molecules align parallel to the electric field which leads to an almost homeotropic alignment. Upon applying an additional electrical pulse or by adequately switching off the reset pulse (fast or slow switch-off), the display relaxes either into the higher twisted state (fast switch-off), or into the lower twisted state (slow switch-off). Depending on the sign of the chiral dopant the lower twisted state can be either Φ₁ or Φ₂. In the following we will therefore designate the lower twisted state by Φ₋ and the higher twisted state by Φ₊. The two metastable states Φ₊ and Φ₋ can optically be distinguished between two polarizers which are properly aligned.

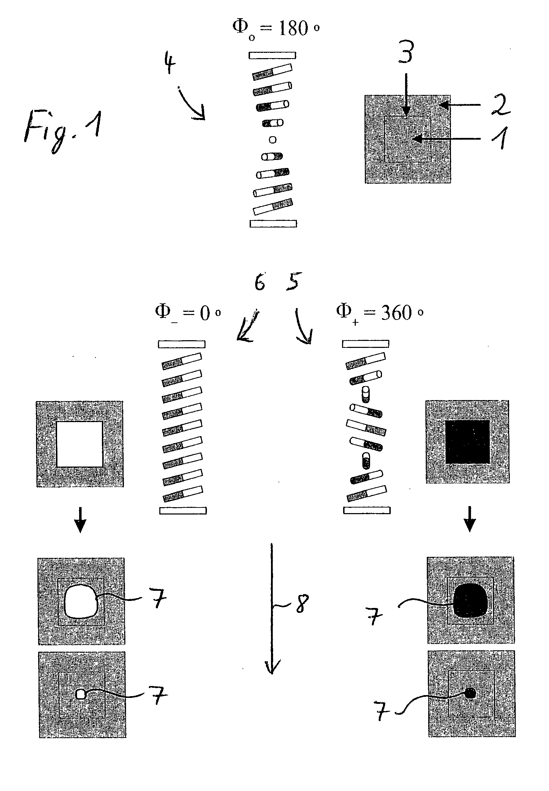

Fig. 1 shows the principle of a temporarily bistable twisted nematic (BTN) cell according to the prior art. There is a pixel area 1, which is defined by the transparent electrode 3. The area outside the pixel 1, the non-pixel area is called frame or border area 2. In both areas 1 and 2 there exist the same ground state configuration Φ₀, numeral 4. When a strong reset pulse is applied to the cell the liquid crystal relaxes into one of the two metastable states Φ₊ (5) and Φ₋ (6). As a consequence of the adjacent different molecular configurations a disclination line 7 forms around the switched area. The disclination line 7 is a consequence of the topological differences between the selected metastable state 5 or 6 and the ground state 4. After formation of a metastable state the ground state Φ₀ (4) slowly moves into the pixel area 1 and the metastable state relaxes back into the ground state 4 again as can be seen in the different representations along the time axis 8. The speed with which the ground state 4 returns is typically of the order of a couple of micrometers per second. For applications which do not require long-term bistability the metastable states 5, 6 of such BTN-cells exist long enough to allow time multiplexing of BTN-cells with adequate driving pulses (see e.g. T. Tanaka, Y. Sato, A. Inoue, Y. Momose, H. Nomura and S. Iino, Asia Display 259 (1995)).

A zenithal bistable display (ZBD) is disclosed in WO 97/14990. ZBDs are made by sandwiching a nematic liquid crystal layer between two transparent, conducting substrates of which one is homeotropically aligned in a conventional manner by using homeotropic surfactants, whereas the other exhibits a surface grating which is overcoated with a homeotropic surfactant. The period of the surface grating is of the order of 1 micrometer and the grating amplitude is 2 to 3 times the grating period. ZBDs enable to switch the liquid crystal in the cell between a homeotropic- and a homeotropic/planar hybrid state. ZBDs exhibit good mechanical stability. Manufacturing of the thin surface gratings such that reproducible and defect free alignment results remains a challenge.

WO 97/17632 discloses bistable nematic displays which switch between a 0° and a 180° twist configuration. A typical display comprises two opposite alignment layers with identical azimuthal alignment directions but distinct and different pretilt angles and anchoring energies. By applying proper electrical pulses it is possible to switch the display between a parallel (0°) and a 180° twisted state. The bistability requires proper balance of the elastic energies of the two states. This is done by doping the liquid crystal with a chiral additive. Since switching of the display crucially depends on the individual anchoring strength of the two alignment layers and because the anchoring strength changes under thermal and optical stress, the bistable performance of the display is very sensitive.

The use of nematic molecular configurations have the advantage that they can be reliably aligned at display boundaries. After switching off the driving voltage of a nematic display, it's electric field-induced on-state molecular configuration reliably returns into the off-state alignment state - even after having exposed the liquid crystal display (LCD) to temperature- or mechanical shocks. However, this is also the cause for their optical mono-stability which causes the displayed image to erase upon switching the driving voltage off. Mono-stability is a severe disadvantage of nematic LCDs in applications which require very low power consumption, and/or the reproduction of images with high information content without use of thin-film transistors (TFT) in display substrates.

Turning the display voltage of a mono-stable LCD off causes it's on-state molecular configuration to relax via elastic restoring forces back into the field-free off-state. Prerequisite to display an image requires therefore to maintain an electric field across each picture element (pixel) of a mono-stable display during the view time (frame time). Therefore, the display has to be constantly addressed with driving voltages which deform the off-state molecular configuration of the electro-optical effect on which the LCD is based such that the desired image is generated. To solve this problem, elaborate TFTs are integrated in high information content nematic LCDs into each pixel on one of the two glass substrates of a display. The TFTs act as electronic storage and addressing elements which render the pixels of the display at least temporarily optically bistable. In combination with the storage capacitance of each pixel, the TFT switches maintain the proper voltage across each pixel during the frame time and prevent the molecules to relax back into their off-state. Since manufacturing of TFTs is very elaborate, high information content LCDs, such as for computer monitors, are expensive and restricted to the most sophisticated display applications. Moreover, TFT manufacturing requires high temperature process steps which are not compatible with plastic substrates. Therefore, integration of TFTs into plastic LCDs to enable high information content plastic LCDs made by roll to roll processes is unlikely to occur.

It is therefore an object of the invention to provide a nematic liquid crystal electrooptical element which is long-term bistable, i.e. to combine the reliable alignment of the nematic elements with the low-power consumption of bistable elements.

The nematic liquid crystal electrooptical element according to the invention uses the characterising features of claim 1.

This element uses a new electro-optical effect with inherent optical bistability based on nematic molecular configurations inheriting the favourable properties of these liquid crystals. Because the optical information is stored in one of the two optical states of a bistable LCD without requiring electronic refreshing as long as the displayed information is not changed, the power consumption of bistable LCDs is minimal.

The domain stabilised bistable twisted nematic (D-BTN) liquid crystal element according to the invention does not only show a significantly enhanced bistability but also better electro-optical performance and multiplexability.

The proposed domain stabilisation in D-BTN-LCDs efficiently suppresses the unwanted ground state and allows long-term bistability and leads to excellent electro-optical performance, reproducibility and life-time of bistable nematic displays due to the novel alignment geometries.

Passive matrix addressed D-BTN-LCDs may exhibit short response times, fast addressing speed and large multiplexing ratios. Since no disclination lines have to be dislocated upon switching D-BTN-LCDs only comparatively weak reset pulses are required.

The combination of both cited advantageous properties allows the fabrication of high information content displays with a fast update rate (video frame rate). Because of the intrinsic bistability of a D-BTN display, only that part of the display image needs to be updated where the image has changed. This partial display image update leads to higher update rates. Especially in the case of slow moving images a very low power consumption results because the update rate is not a fixed, periodic process but can be done on demand any second, minute, hour or day. In-between these refresh cycles there is no power consumption. The last updated display image is always present and does not need any further electrical powering.

The liquid crystal display device according to the invention uses the characterising features of claim 19 and 20.

These and other objects, features and advantages of the invention will become more apparent in light of the following detailed description of embodiments thereof, as illustrated in the accompanying drawings, in which:
- Fig. 1: a schematic view on a temporarily bistable twisted nematic cell according to the prior art,
- Fig. 2: an illustration of a domain stabilised nematic liquid crystal device according to the invention with one photo-aligned substrate,
- Fig. 3: an example of bottom and top alignment layer of a domain stabilised nematic liquid crystal device according to the invention with one photo-aligned substrate and the resulting cell with the interface LC molecule orientations,
- Fig. 4: an example of bottom and top alignment layer of a further embodiment of a domain stabilised nematic liquid crystal device according to the invention with two photo-aligned substrates and the resulting cell with the interface LC molecule orientations,
- Fig. 5: an example of bottom and top alignment layer of a yet another embodiment of a domain stabilised nematic liquid crystal device according to the invention with pixel to pixel stabilisation and the resulting cell with the interface LC molecule orientations,
- Fig. 6: higher (dark) and lower (bright) twisted state pixels of a cell according to the invention, observed through a 490 nm interference filter, and
- Fig. 7: an example of bottom and top alignment layer of still a further embodiment of a domain stabilised nematic liquid crystal device according to the invention with two photo-aligned substrates and the resulting cell with the interface LC molecule orientations.

The current invention focuses on novel means and molecular configurations to achieve long-term stabilisation of bistable nematic liquid crystal displays.

All optical bistable liquid crystal displays - smectic, cholesteric, or nematic - reported so far are characterised by global alignment layers; i.e. the alignment of the display extends uniformly over the entire area of both display substrates; where the alignment direction may differ on each substrate.

In contrast, the present invention chooses a new approach to achieve bistability in generally twisted nematic LCDs by using non-global alignment geometries. This approach surprisingly enables long term stable and reproducible bistable operation of nematic LCDs.

Patterned alignment layers on either one, or both substrates of nematic displays enables to generate different LC-configurations which coexist simultaneously and which induce bistability in a pre-defined pixel area (in contrast to the temporary bistability of the nematic displays known so far). In the following the principle of this novel type of nematic bistability, denominated domain stabilised BTN (D-BTN), will be described.

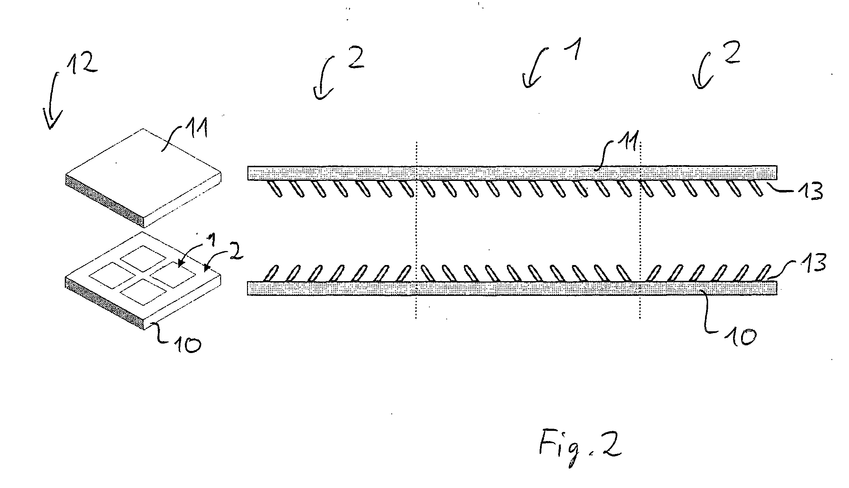

Fig. 2 shows a perspective view of a domain stabilised nematic liquid cell 12 with 2×2 elements with one photo-aligned substrate 10 and a cross-section through the device. Pixel Areas 1 and frame areas 2 are referenced in the same way as in Fig. 1.

Typically a first domain configuration governs the pixel areas 1, whereas the area outside the pixels - i.e. the border or frame area 2 - defines a second domain, which is governed by different molecular configurations. This additional border domain outside the pixel provides the target configuration in the pixel area 1 the stability. As can be seen from the cross-section pixel area 1 and frame area 2 of the photo-aligned substrate 10 retain different azimuthal and pretilt orientation.

It is to be noted that the invention includes also the case, where in the immediate neighbourhood of a pixel area 1 there are other pixels instead of the border domain. The molecular configuration of the neighbour pixels for instance could correspond, except for a symmetry operation (mirror, rotation or combination), to the molecular configuration of the pixel area 1.

Since the border domains between the pixel 1 can be hidden with black matrices, the border LC-configurations can be optimised for bistability regardless of their optical properties. Upon applying appropriate voltages to the pixels 1 of such domain stabilised BTN-displays they switch between different bistable states. Each pixel 1 exhibits a sufficient degree of bistability to allow for high multiplexing rates and/or electrically erasable optical image storage.

A display cell 12 according to the invention, as in Fig. 2, consists of at least one substrate 10 with different alignment directions (regarding either azimuth or pretilt or both) at the substrate interfaces 13 which suppresses the growth of the Φ₀ ground state 4 in the pixel area 1 and therefore stabilises the two metastable states Φ₊ 5 and Φ₋ 6. Therefore the Φ₊ and Φ₋ states are referred to as the bistable states 5 and 6 of the D-BTN display 10, using the same numerals.

The alignment orientation in the pixel area 1 of a D-BTN display 10 corresponds with the global orientation of conventional BTN cells. In border areas 2 between pixels 1, or more generally, in the areas adjacent the respective pixel 1 different alignment directions are generated.

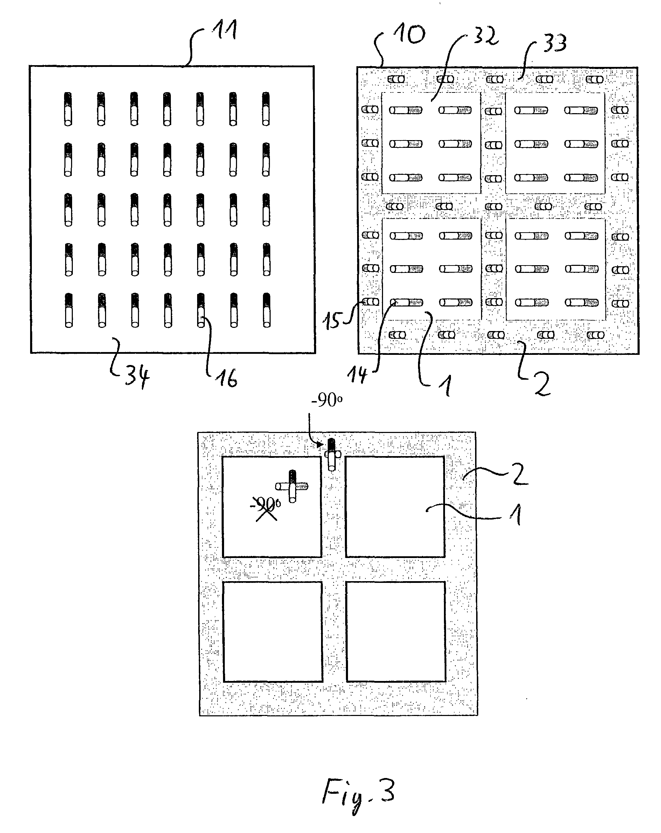

Fig. 3 shows a top view of the individual substrates 10 and 11 of Fig. 2 and their combination, together with the relevant LC molecular orientations 14, 15 and 16 at the substrate interfaces 13. The configuration leads to two domains (frame area 2 and pixel area 1), which are the result of the alignment pattern on the bottom substrate 10 and a globally aligned upper substrate 11.

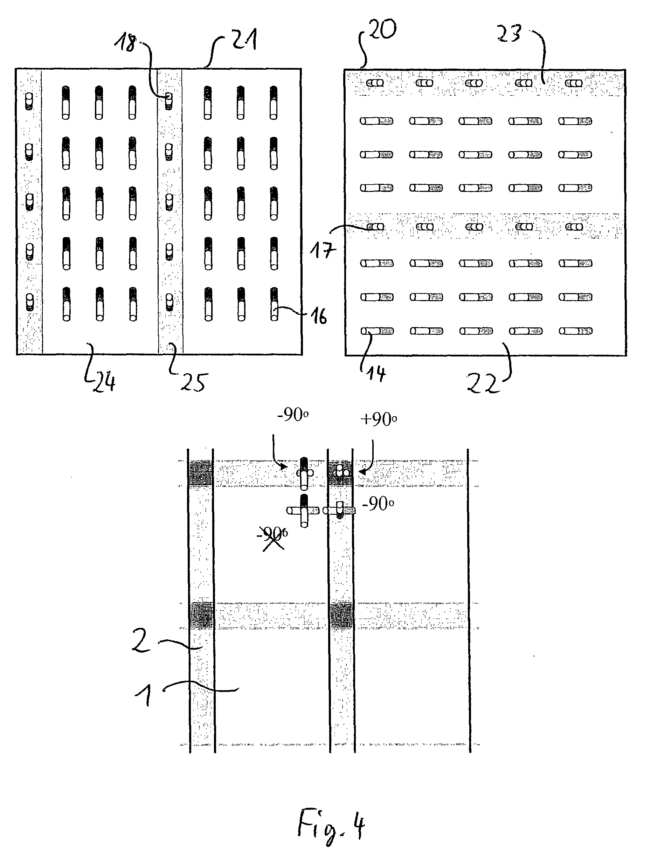

Fig. 4 shows another embodiment of a D-BTN-LCD consisting of a two domain alignment layer on both substrates 20 and 21. Substrate 20 and substrate 21 comprise stripes 22, 23 and 24, 25, respectively, with different alignment directions. By using substrates 20 and 21 to build a cell, pixel areas 1 are created with portions of stripes 22 and 24, whereas frame areas 2 are created through portions of stripes 22 and 25, 23 and 24 and 23 and 25, i.e. wherein at least one substrate portion 20 or 21 comprises the alignment according to the smaller stripes 23 and 25. Therefore only the combination of stripes 22 and 24 contribute to the existence of pixel areas 1 whereas the existence of one of the stripes 23 or 25 contribute to frame areas 2.

A particularly suitable technique to realise the required alignment configurations 14, 15 and 16 are photo-alignment methods. Such methods use irradiation with - usually polarised - light to induce alignment capability in a corresponding orientation layer. Apart from the advantage of avoiding the problems inherent in the rubbing process, with these photo-orientation methods it is possible to provide areas having different orientation and thus to structure the orientation layer.

A prerequisite for the applicability of a photo-alignment method to the present invention is their ability to generate not only azimuthal orientation but also bias tilt (pretilt).

One such method, which will be advantageously used for the present invention, is the linear photopolymerization (LPP) method, also sometimes referred to as photooriented polymer network (PPN). It is described for instance in US 5,389,698, US 5,838,407 and EP 0 756 193. An overview of the method can also be found in M. Schadt, K. Schmitt, V. Kozenkov and V. Chigrinov, Jap. Journal Appl. Phys. 31, 2155 (1992), or in M. Schadt, H. Seiberle and A. Schuster, Nature 381, 212 (1996). Those photo-oriented polymer networks can be used wherever structured or unstructured liquid crystal orientation layers are required.

Polymers that are suitable for the formation of such photostructured orientation layers for liquid crystals are for instance described in WO-A-96/10049 and EP-A-0763552. With these compounds on irradiation with linearly polarised light it is possible, in addition to inducing the desired orientation, simultaneously to induce an angle of tilt. It is thus possible to produce layers having structuring in respect of azimuthal orientation and angle of tilt.

The domain stabilised displays of the present invention do not necessarily require photo-aligned boundaries, they could also be realised with alternative alignment techniques. For instance with sophisticated rubbing or evaporation techniques, provided two different alignment directions and the necessary pretilt angle can be achieved. Photo-alignment is thus not a prerequisite for fabricating D-BTN displays, however, it makes the fabrication process much easier.

The proposed domain alignment layers can also be used to further enhance the angle of view of D-BTN displays by subdividing pixels into sub-pixels.

The following description relates to examples of cells, starting with a D-BTN-LCD with photo-aligned domain orientation pattern on one cell substrate switching between the two bistable twist states +90° and -270° (Example 1), shown in Fig. 3.

The D-BTN-LCD cells made consist of a base substrate 10 and a cover substrate 11. Both substrates 10 and 11 retain transparent electrodes and photo-alignment layers. The transparent ITO electrodes are uniform over an area of 8 x 8 mm² comprising many pixels of either size 200 x 400 µm² size or 600 x 1000 µm².

The two-domain photo-alignment layer 32 and 33 on the base substrate 10 induces two different LC orientations, one within the pixel area 1 and the other within the surrounding border area 2. The upper substrate 34 is uniaxially photo-aligned in one direction over the entire area.

The photo-alignment layers are typically 50 nm thin and the LPP photopolymer JP265 from Ciba Speciality Chemicals Ltd. is used, in the form of a solution of 2% photopolymer desolved in cyclopentanon. The liquid crystal mixture is a supertwisted nematic (STN) mixture with a birefringence of 0.129, available under the name MLC 14000 from Merck Ltd.. To obtain the desired intrinsic twist configuration the LC mixture is doped with the negative handed chiral additive ST9 of Merck Ltd.. The cell gap is 5.1 µm and a chiral concentration of 0.58 %(wt) was chosen, which results in a d/P ratio of 0.3 (d = cell gap, P = helical pitch).

The LPP-photo-alignment material was applied by spin coating 30 seconds with 3000 rpm and then baked on a hot plate at 150 °C for 30 minutes. The LPP coated substrates were illuminated with a Karl-Suess UV-exposure lamp equipped with a 350 W Mercury bulb and a UV-polarizer. The UV-light intensity at 310nm is 0.8mW/cm². The substrates were exposed to linearly polarized UV light under a polar angle of 35° with respect to the substrate normal for all here described exposures. To generate the two-domain alignment of Fig. 3 on the base (lower) substrate 10, the substrate 10 was in a first step exposed to UV light for 135 seconds, while masking the frame area with a chromium mask. The azimuthal orientation of the linearly polarized light was parallel to one of the pixel boundaries and defined as 0°. In a second exposure step, the mask was removed and the entire substrate exposed for 15 seconds, again under a polar angle of 35°, under the azimuthal angle of 180°. From other experiments it is estimated, that the resulting pretilt angles were between 5° and 10° (see numeral 14) in the pixel area 1 and about 70° (see numeral 15) in the frame area 2. The top substrate was exposed for 150 seconds which leads to an estimated uniform pretilt angle of between 5° and 10°; the corresponding azimuthal angle was +90° (see numeral 16 in comparison to 14 and 15). Thus in the pixel area the chirally negative doped LC together with the azimuthal orientation of the alignment layer favours a twist angle of -90° (Φ₀ = -90° = the ground state), whereas the pretilt angles support a twist of either +90° or -270° (i.e., [Φ₀ = -90°] ± 180° are the two bistable states).

After filling the D-BTN cell with the LC mixture in near isotropic phase at 115 °C and cooling it to room temperature, a major part of the cell is covered with disclinations. The two following methods were applied to get to the wanted pixel configurations.

By applying an electrical sinusoidal pulse of 10 ms duration and a voltage of 50 Vrms to the cell at room temperature, the pixels go into the lower twisted bistable state (+90°).

By applying an electric sinusoidal AC field of 38 Vrms for two seconds at 65 °C all ground-state pixels go into the +90° bistable state and the disturbing disclination lines disappear.

It is presumed that between the border domain, which is in a stable ground state and does not substantially change its LC configuration while switching, and the switchable pixel domain, a disclination line forms. The disclination line is located at the edges of the photo-patterned pixel and prevents the ground state from flowing into the pixel area.

Switching between the two bistable states can be achieved with various types of pulses. To demonstrate bistability here simple pulse forms were chosen. Switching into the higher twisted state (-270°) is done with a 500 µs sinusoidal pulse of 21 Vrms. An optical switching time of 100 ms results. Switching into the lower twisted state can be achieved with a saw-tooth pulse of 5 V (peak value), with a short rise time of about 100 µs or less and a decay time of about 60 ms. Such a pulse results in an optical switching time of 230 ms. The lower twisted pixel state exhibits a green interference colour, for parallel polarizers and with the alignment layer orientation of the D-BTN cell parallel to the polarizers. The colour of the higher twisted state appears red for the same polarizer configuration.

For a possible adjustment of the colours, various methods are known to the skilled person. For instance, with a good choice of the optical retardation Δnd of the LC layer, with internal or external optical compensation films and proper orientation of the polarizers the two interference colours can be modified such that a black and white display results. Furthermore, using a thinner LC layer a much faster response time results. Together with the BTN's potential for fast high multiplexable addressing schemes a high information content display can be fabricate with the D-BTN concept which allows video-up-date rate.

Sample cells made as described above have maintained their bistability over the whole observation period, which usually was several months.

Fig. 4 shows a schematic view of example 2, a D-BTN LCD with a photo-aligned orientation pattern on both cell substrates 20 and 21 switching between the two bistable twist states +90° and -270°. It shows the two-domain alignment pattern of the two substrates (in the upper part) as well as the combined substrates (in the lower part).

The D-BTN LCD cell of example 2 was prepared in a similarly way as in example 1. However, contrary to example 1 both substrate surfaces 20 and 21 exhibit a two-domain photo-alignment layer in the form of stripes 22, 23 and 24, 25. Each alignment layer covers broader stripes 22 and 24, respectively, which build a pixel area of 100 µm, and narrower stripes 23 and 25, respectively, which build a frame area of 30 µm, with two different alignment directions in the two areas. The UV-exposure time was 135 seconds for the pixel area and 15 seconds for the frame area. Pretilt angles are estimated to be between 5° and 10° in the pixel area 1 (numeral 14 and 16) and about 70° in the frame area 2 (with at least one LC orientation according numeral 17 or 18).

As in example 1, in the pixel area 1 the chirally negative doped LC together with the azimuthal orientation of the alignment layer favours a twist angle of -90° (ground state Φ₀ = -90°), whereas the pretilt angles support a twist of either +90° or -270° (the two bistable states).

An electric field treatment analogous to the one described in example 1 is performed here as well in order to get the wanted bistable pixel configurations.

A 500 µs sinusoidal-pulse of 23 Vrms was used to switch the display into it's higher twisted state. An optical switching time of 80 ms results. Switching into the lower twisted state can be achieved with a saw-tooth pulse of 6 V (peak value), with a short rise time and a decay time of 40 ms. Such a pulse results in an optical switching time of 200 ms. The lower twisted pixel state exhibits an interference colour which is light blue under parallel polarizers and with the alignment layer orientation of the D-BTN cell at 45° with respect to the polarizers. The colour of the higher twisted state is red.

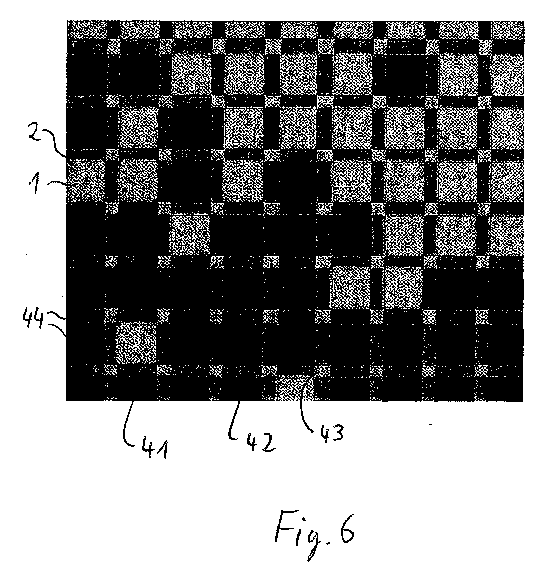

An illustration of the two bistable states of this partially switched fabricated display is shown in Fig. 6. It is observed through a blue 490 nm interference filter. The pixel colour of the lower twisted states 41 is light blue and pixel colour of the higher twisted states 42 is black. Furthermore, one can distinguish two different regions of the frame domain. At the corner 43 of the pixel areas 1 (i.e. the intersection points of the stripes 23 and 25 of the upper and lower substrate's alignment layers building the frame area 2), there is a region 43 with high tilt (c.f. Fig. 4), which appears bright between parallel polarizers. At the edges 44 (between two adjacent pixel areas 1), there is a region with medium tilt, which appears darker. Both regions 43 and 44 of the frame domain 2 have a very stable state. Additionally, a skilled person can also see the disclination lines separating the pixel domains 1 from the frame domains 2.

With a good choice of the Δnd of the LC layer, with internal or external optical compensation films and proper orientation of the polarizers the two interference colours can be modified such that a black and white display results. Using a thinner LC layer a much faster response time results. Together with the BTN's potential for fast high multiplexable addressing schemes a high information content display can be fabricate with the D-BTN concept which allows video-up-date rate.

In order to test the stability of the D-BTN cells, the devices were put under strong pressure such that LC-flow occurred. Under pressure the state with the lower energy appeared. This state can be controlled by adjusting the d/P ratio and the respective pretilt angles. Only very intense flow or very high electrical fields caused the ground state to occur again. This demonstrates the high degree of stabilisation of the bistable states against the formation of the ground state Φ₀ in domain stabilised LC cells according to the invention.

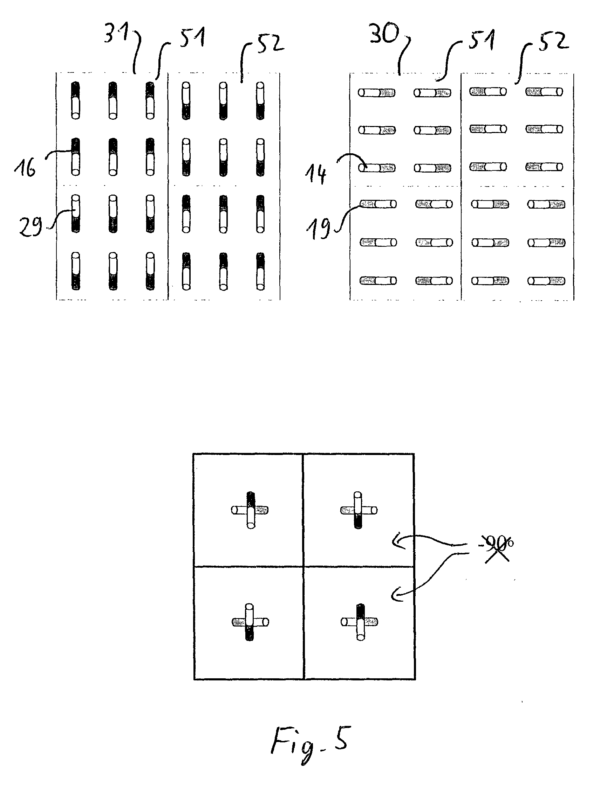

Fig. 5 shows an example of a further embodiment of the invention. It is based on a pixel to pixel stabilisation in both substrates 30 and 31, that is, instead of an explicit frame area the configuration of the adjacent pixels 51, 52 is used to stabilise the two bistable states. The azimuthal orientation in the pixels is equal to the orientation of the pixel in example 1 and results in a 90° / -270° type D-BTN cell. In order to achieve the proper alignment in neighbouring pixels 51, 52 the bottom and top substrates 30 and 31 are aligned with a single photo-mask according to procedure explained in example 1. However in contrast to the example 1 the two alignment layers have to be aligned against each other in such a way that adjacent pixel domains 51, 52 are positioned opposite to each other (see Fig. 5, numerals 14 and 19, 16 and 29). A very high fill factor for D-BTN LCDs results with this approach.

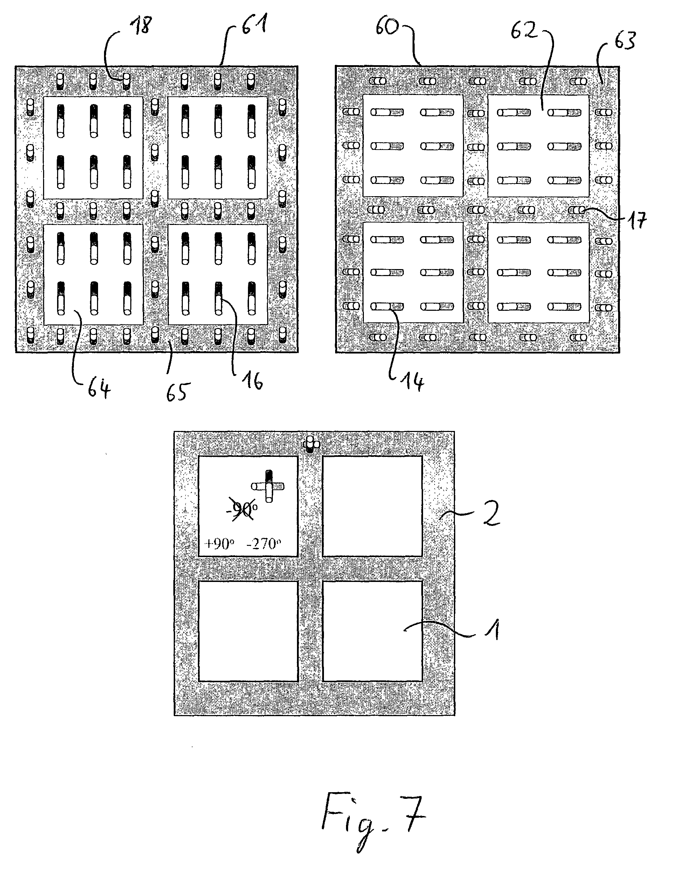

Still another embodiment of the invention is illustrated in Figure 7. It represents a +90°/-270° (Φ₀ = -90°) element that consists of a two-domain alignment layer on both substrates 60 and 61. Substrate 60 and substrate 61 comprise pixel areas 62, 64 and a frame areas 63, 65, with different alignment directions. The alignment layers of the two substrates are adjusted against each other in such a way that the pixel areas of the two substrates are positioned opposite to each other. The azimuthal and pretilt orientation in the pixel areas are similar to the orientation in a conventional BTN cell. By using such substrates the pretilt angle in the pixel domain and the pretilt angle in the frame domain can be chosen independently. This in contrast to the embodiments shown in Figure 3 and Figure 4. If for the embodiment illustrated in Figure 3 a low pretilt in the pixel area 1 of the lower substrate 10 and a low pretilt in the uniaxially aligned upper substrate 11 and further a high pretilt in the frame area 2 on the substrate 10 is chosen, an intermediate average tilt angle results in the frame domain of the cell. The same is true for the embodiment shown in Fig. 4. In the embodiment shown in Figure 7, advantageously a low pretilt angle in the pixel domain and a high pretilt angle in the frame domain can be chosen.

The domain stabilised approach to achieve bistable nematic LCDs according to the present invention may not only stabilise switchable domains in BTN cells, but also enables to stabilise cells which switch between a 0° and a 180° twist configuration, such as those described in the introductory part of this specification (the generalisation includes devices with twist angles Φ₀ ± 90°, with typically Φ₀ < 180°). After switching a conventional 0° - 180° twist cell, the switched domains usually show a random shape. With the present invention well defined areas can be obtained. The cell fabrication may be done according to example 1 but the cover substrate is azimuthally oriented in such a way that in the pixel area the required configuration results. The size of the pixel is an important parameter when designing this type of cells.

The invention includes bistable cells which contain in-plane electrode geometries which allow to apply electric fields which are perpendicular to the substrates and fields which have components parallel to the substrate planes. Such electrodes allow to switch the cells in on direction (Φ₋ ⇒ Φ₊ or Φ₋ ⇐ Φ₊) or in both directions (Φ₋ ⇔ Φ₊). As example could be cited the cell according to example 1 with one or both electrodes partitioned.

The absolute value of the bias twist angle |Φ₀| (ground state) in the examples was always 90°. Generally, an absolute value of the bias twist angle |Φ₀| < 300° is preferred, but |Φ₀| ≥ 300° could also be used. The twist difference angles ΔΦ = ± 180° mean, that ΔΦ has a quantized size and is roughly ± 180° (ΔΦ is Φ₀ - Φ₊ or Φ₀ - Φ₋ respectively).

Advantageously, the pretilt angle difference between adjacent areas of the pattern is in the range between 70° and 110°, preferably in the range between 80° and 100°, more preferably between 85° and 95°. The term "pretilt angle difference" means the difference angle between the vectors defined by the interface liquid crystal molecules retaining the predefined pretilt angle in adjacent areas of the pattern. As an example, if in Figure 3 the pretilt angle were 10° in the pixel area 1 and 80° in the frame area 2, then the pretilt angle difference would be 90°.

The pretilt angle in the pixel area 1 is typically less than about 20° (on both substrate) but larger tilt angles could also be used. The pretilt angle in the frame area 2 is typically larger than about 45° but could also be smaller.

The absolute value of the bias twist angle |Φ₀| in the ± 90° cells is typically |Φ₀| < 300° but |Φ₀| ≥ 300° could also be used. The twist difference angle ΔΦ = ± 90° mean, that ΔΦ has a quantized size and is roughly ± 90°.

The size of the pixels 1 is typically a few 10 µm, for many applications preferably from 4 µm to 400 µm, but could be much smaller as well as much larger.

It is possible that the domain stabilisation as outlined in this description generates more than two stable states 5 and 6.

Domain stabilised cells according to the invention may in addition contain suitable internal or external optical compensation layers in order to improve brightness and/or contrast. These compensators can for instance comprise liquid crystalline thin films (uniaxial or twisted layers), stretched polymer films or of combinations of such films.

The present invention is applicable to transmissive and reflective displays. As substrates, preferably glass, plastic or CMOS may be used.

But also applications other than displays are possible. These include for instance electrooptical shutters and spatial light modulators.

An electrooptical shutter is usually used to switch on and off a light beam. A very high contrast and brightness can be achieved when the light source to be processed retains a narrow spectral width. Examples are lasers or LEDs, which are typically used in telecommunication and other applications. Still a good contrast and brightness can be achieved for light sources with a broader spectral width. Depending on the D-BTN design a black matrix is required to suppress light transmitting the stabilizing border area between the pixels.

In spatial light modulators (SLM) each pixel could be a D-BTN element. Among the various SLMs are electrically and optically addressed SLMs, transmissive and reflective, and amplitude and phase modulating SLMs. The SLM would represent a binary SLM since each pixel is able to be in one of two states. A D-BTN pixel could however be subdivided into sub-pixels as long as the sub-pixel dimension is larger than the cell gap of the involved LC element.

In most cases the electrode size is larger or nearly equal to the size of the photo-patterned pixel.

Since domain stabilised cells according to the invention in most cases advantageously should have a stable pitch for the required temperature range, it may be recommendable to use LC mixtures that have a pitch that does not depend on temperature. A possible approach for such an LC mixture is described in EP 0 450 025 of Rolic Ltd.

## Claims

1. A liquid crystal electrooptical element (12) comprising a pair of substrates (10, 11; 20, 21; 30, 31; 60, 61), the respective opposing inside surfaces of which are provided with alignment surfaces or layers, and a nematic liquid crystal sandwiched between said pair of alignment surfaces or layers,
**characterised in that** at least one of the alignment surfaces or layers is patterned in such a way that the azimuth or pretilt or both alignment directions (14 to 15, 14 to 17, 16 to 18, 14 to 19, 16 to 29) are different in adjacent areas of the pattern thereby defining in at least some domains of the liquid crystal a ground state (Φ₀) and at least two bi- or multistable states (Φ₊, Φ₋) and suppressing the growth of the ground state of the liquid crystal.

2. The element according to claim 1, **characterised in that** the pretilt angle difference between adjacent areas of the pattern is in the range between 70° and 110°.

3. The element according to claim 2, **characterised in that** the pretilt angle difference between adjacent areas of the pattern is in the range between 80° and 100°.

4. The element according to claim 3, **characterised in that** the pretilt angle difference between adjacent areas of the pattern is in the range between 85° and 95°.

5. The element according to any of claims 1 to 4, **characterised in that** the alignment layer corresponding to one substrate (11) comprises a global orientation for the whole substrate (11) and **in that** the alignment layer corresponding to the other substrate (10) comprises first alignment directions (14) in first portions (32) spaced apart one from another and second alignment directions (15) in second portions (33) provided between the first portions (32), wherein the areas of the first portions (32) form pixel areas (1).

6. The element according to claim 5, **characterised in that** the pretilt angle in the first alignment layer (34) is less than 20° (16), preferably less than 10°, **in that** the pretilt angle in the second alignment layer in areas (33) not contributing to said pixel areas (1) is more than 50° (15), preferably about 80°, and **in that** the pretilt angle in the second alignment layer in areas (32) contributing to said pixel areas (1) is less than 20° (14), preferably less than 10°.

7. The element according to claim 5 or 6, **characterised in that** the azimuthal angle difference between the first alignment layer (34) and the areas (32) contributing to said pixel areas (1) is +90° and **in that** the azimuthal angle difference between the first alignment layer (34) and the areas (33) not contributing to said pixel area is -90°.

8. The element according to any of claims 1 to 4, **characterised in that** the alignment layer corresponding to one substrate (21) comprises first alignment directions (16) in first stripe portions (24) spaced apart one from another and second alignment directions (18) in second stripe portions (25) provided between the first stripe portions (24) and **in that** the alignment layer corresponding to the other substrate (20) comprises third alignment directions (14) in third stripe portions (22) spaced apart one from another and fourth alignment directions (17) in fourth stripe portions (23) provided between the third stripe portions (22), wherein the substrates (20 and 21) are mounted in a way that the first and second stripe portions (24 and 25) are at an angle to the third and fourth stripe portions (22 and 23), wherein the sandwiched areas with first and third stripe portions (22 and 24) form pixel areas (1).

9. The element according to claim 8, **characterised in that** the pretilt angle in the first alignment layer in the first stripe portions (24) is less than 20° (16), preferably less than 10°, **in that** the pretilt angle in the first alignment layer in the second stripe portions (25) is more than 50° (18), preferably about 80°, **in that** the pretilt angle in the second alignment layer in the third stripe portions (22) is less than 20° (14), preferably less than 10°, and **in that** the pretilt angle in the second alignment layer in the fourth stripe portions (23) is more than 50° (17), preferably about 80°.

10. The element according to claim 8 or 9, **characterised in that** the azimuthal angle difference between the first stripe portions (24) and the third stripe portions (22) is +90° and **in that** the azimuthal angle difference between the first and second alignment layers (24, 25) and between the third and fourth alignment layers (22, 23) is 180°, respectively.

11. The element according to any of claims 1 to 4, **characterised in that** the alignment layer corresponding to one substrate (31) comprises a chequered pattern of first alignment directions (16) in first portions (35) and of second alignment directions (29) in second portions (36) and **in that** the alignment layer corresponding to the other substrate (30) comprises a chequered pattern of third alignment directions (14) in third portions (37) and of fourth alignment directions (19) in fourth portions (38), wherein the substrates (30 and 31) are mounted in a way that the first and second portions (35 and 36) are congruent with the third and fourth portions (37 and 38), respectively, wherein each sandwiched portion (51 out of 35 and 37,52 out of 36 and 38) forms a pixel area (1).

12. The element according to claim 11, **characterised in that** the pretilt angle in the first alignment layer and in the second alignment layer is less than 50° (14, 16, 19, 29).

13. The element according to claim 11 or 12, **characterised in that** the azimuthal angle difference between the first portions (35) and the second portions (36) of the first alignment layer is 180°, **in that** the azimuthal angle difference between the third portions (37) and the fourth portions (38) of the second alignment layer is 180° and **in that** the azimuthal angle difference between first and third portions (35 and 37) and between second and fourth portions (36 and 38) is 90°.

14. The element according to any of claims 11 to 13, **characterised in that** the first, second, third and fourth portions (35, 36, 37, 38) are rectangular, preferably quadratic, portions.

15. The element according to any of claims 1 to 4, **characterised in that** the alignment layer corresponding to one substrate (61) comprises first alignment directions (16) in first portions (64) spaced apart one from another and second alignment directions (18) in second portions (65) provided between the first portions (64), and **in that** the alignment layer corresponding to the other substrate (60) comprises third alignment directions (14) in third portions (62) spaced apart one from another and fourth alignment directions (17) in fourth portions (63) provided between the third portions (62), wherein the substrates (60 and 61) are mounted in a way that the first and second portions (64 and 65) are congruent with the third and fourth portions (62 and 63), respectively, and wherein the areas of the first portions (64) and of the third portions (62) form pixel areas (1).

16. The element according to claim 15, **characterised in that** the pretilt angle in the first portions (64) is less than 20°, preferably less than 10°, **in that** the pretilt angle in the second portions (65) is more than 50°, preferably about 80°, **in that** the pretilt angle in the third portions (62) is less than 20°, preferably less than 10°, and **in that** the pretilt angle in the fourth portions (63) is more than 50°, preferably about 80°.

17. The element according to claim 15 or 16, **characterised in that** the azimuthal angle difference between the first portions (64) and the third portions (62) is +90°, and **in that** the azimuthal angle difference between the second portions (65) and the fourth portions (63) not contributing to said pixel area is -90°.

18. The element according to any preceding claim, **characterised in that** the alignment directions in at least one of the alignment layers are created through photo-alignment.

19. A liquid crystal display device comprising a liquid crystal electrooptical element as defined in any one of the preceding claims.

20. A liquid crystal display device wherein a matrix is disposed by forming each of the electrodes of the liquid crystal electrooptical element as defined in any one of the preceding claims into a scanning electrode group and a signal electrode group with pixels being formed by the intersection of the scanning electrode group and the signal electrode group.

21. An electrooptical shutter comprising a liquid crystal electrooptical element as defined in any one of claims 1 to 18.

22. A spatial light modulator comprising a liquid crystal electrooptical element as defined in any one of claims 1 to 18.
